# EUROPEAN PATENT APPLICATION

(11) **EP 2 451 004 A1**
(43) Date of publication of application: **09.05.2012**
(21) Application number: 10793863.1
(22) Date of filing: 02.07.2010
(51) Int. Cl.: H01M 10/50, H01M 2/10, H05B 3/14

(54) **HEATING DEVICE AND BATTERY UNIT PROVIDED THEREWITH**

(30) Priority: 03.07.2009 JP 2009158734
(71) Applicant: Panasonic Corporation, Kadoma-shi Osaka 571-8501 (JP)
(72) Inventor: Yukio Abe, Chuo-ku,Osaka-shi Osaka 540-6207 (JP); Koji Yoshimoto, Chuo-ku ,Osaka -shi Osaka 540-6207 (JP)
(74) Representative: Schwabe - Sandmair - Marx
(86) International application number: PCT/JP2010/004351
(87) International publication number: WO 2011/001691

(57) **Abstract**

There is a disclosure of a heater configured to heat a battery with stacked battery cell modules. The heater includes a heating element and a heat conductor, which is situated along the heating element. The heat conductor comes into contact with each of the battery cell modules.

## Description

### TECHNICAL FIELD

The present invention is related to a heater and a battery unit having the same.

### BACKGROUND OF THE INTENTION

Recently, batteries have been widely used in various fields. For example, batteries are mounted on vehicles such as automobiles. Batteries mounted on vehicles, which are used under an environment of -30°C or less, are often heated by an auxiliary heat source so as to prevent battery liquid from freezing or to avoid decreased function of the batteries. As a result, it becomes less likely that freezing battery liquid or decreased electric capacitance causes activation failures of the engine.

Figs. 12 and 13 show a battery and a heater which heats the battery (see Patent Document 1). Fig. 12 is a cross-sectional view of the battery and the heater. Fig. 13 is a plane view of a radiator plate of the heater.

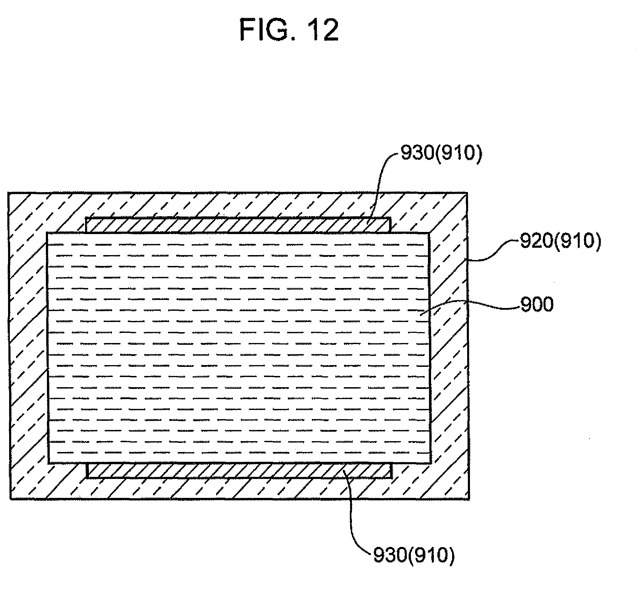

As shown in Fig. 12, the heater 910 includes a lagging material 920, which surrounds the battery 900, and the radiator plate 930, which comes into contact with the periphery of the battery 900. The lagging material 920 has heat insulating properties. Thus, heat from the radiator plate 930 is appropriately transferred to the battery 900, and kept inside the battery 900.

The heater 910 includes positive temperature coefficient (PTC) heating elements 941, 942, which are made of ceramic attached to the radiator plate 930. Electric power is supplied from the battery 900 to the PTC heating elements 941, 942, so that the PTC heating elements 941, 942 generate the heat, and then the battery 900 is heated by the radiator plate 930.

Patent Document 2 discloses technologies to heat a battery by means of a flexible substrate coated with a resin-based PTC heating element. The resin-based PTC heating element is formed of a mixture of conductive powder and resin. The sheet-like PTC heating element includes a comb-shaped electrode. The comb-shaped electrode does not generate heat. Thus, inappropriate arrangement of the electrode with respect to the battery may cause uneven heating.

Recently, hybrid vehicles, which use combinations of an engine and a motor as power sources, and electric vehicles, which use only motors as power sources, have become popular to save energy and reduce CO₂. A battery mounted on the hybrid or electric vehicle is designed to have a high capacitance for driving the motor. Typically, the battery of the hybrid or electric vehicle includes several battery cell units which are stored in a case. The battery cell unit includes several battery cells which are connected in series. The battery cell units are connected in series in the case (optionally, the battery cell units are connected in parallel as well) to achieve a capacitance high enough to drive the motor.

The battery with the high capacitance also has the problem about the decreased electric capacitance under the aforementioned low environmental temperature. Therefore, it is considered to heat the batteries of the high capacitance by means of the disclosed heating technologies in Patent Documents 1 and 2.

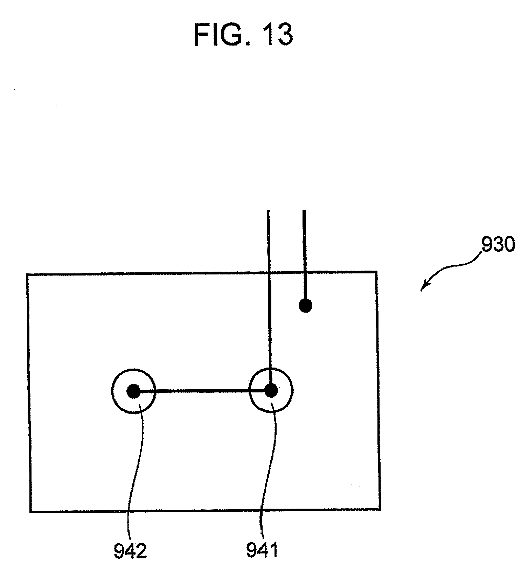

However, the structure of the PTC heating elements 941, 942, which are shown in Figs. 12 and 13 as the heating elements attached to the radiator plate 930, causes a temperature difference between an area near the PTC heating elements 941, 942 and another area. As a result, if the battery with the multi-layered battery cell units, which are used for the hybrid or electric vehicle, is heated by the structure shown in Figs. 12 and 13, the temperature difference occurs between the battery cell units, which results in insufficient recovery of the capacitance of the whole battery. The uneven heating by the PTC heating element including the comb-shaped electrode disclosed in Patent Document 2 also causes the same problem.

Patent Document 1: JP H9-190841 A
Patent Document 2: JP H9-213459 A

### DISCLOSURE OF THE INVENTION

It is an object of the present invention to provide a heater configured to suppress a temperature difference between battery cell units, and a battery unit having the same.

According to one aspect of the present invention, a heater for heating a battery with stacked battery cell modules includes a heating element, and a heat conductor situated along the heating element, wherein the heat conductor comes into contact with each of the battery cell modules.

According to another aspect of the present invention, a battery unit includes a battery with stacked battery cell modules; and a heater configured to heat each of the battery cell modules, wherein the heater includes a heating element and a heat conductor situated along the heating element, the heat conductor comes into contact with each of the battery cell modules.

### BRIEF DESCRIPTION OF THE DRAWINGS

Fig. 1 is a perspective view of a battery unit according to the first embodiment.
Fig. 2 is a schematic connection diagram of battery cells used in the battery unit shown in Fig. 1.
Fig. 3 is a schematic partial cross-sectional view of the battery unit shown in Fig. 1.
Fig. 4 is a schematic partial cross-sectional view of a battery unit according to the second embodiment.
Fig. 5 is a schematic partial cross-sectional view of a battery unit according to the third embodiment.
Fig. 6 is a schematic partial cross-sectional view of a battery unit according to the fourth embodiment.
Fig. 7 is a schematic exploded perspective view of a PTC heater exemplified as a heating element of the battery unit shown in Fig. 6.
Fig. 8 is a graph schematically showing a relationship between saturation temperature characteristics of the PTC heater depicted in Fig. 7 and a heatproof temperature of a battery.
Fig. 9 is a graph showing characteristics of the PTC heater depicted in Fig. 7.
Fig. 10 is a schematic partial cross-sectional view showing a battery unit according to the fifth embodiment.
Fig. 11 is a schematic enlarged view of the battery unit shown in Fig. 10.
Fig. 12 is a cross-sectional view of a battery and a heater according to a conventional art.
Fig. 13 is a plane view of the heater shown in Fig. 12.

### DETAILED DESCRIPTION OF THE INVENTION

Hereinafter, heaters and batteries according to various embodiments of the present invention are described with reference to the accompanying drawings. In the following embodiments, the same components are denoted by the same reference numerals. Redundant descriptions are omitted as appropriate to clarify the descriptions. Configurations, arrangements or shapes depicted in the drawings, and descriptions related to the drawings facilitate to make principles of the following embodiments understood. It should be noted that the principles described in the following various embodiments are not limited to these.

### <First Embodiment>

### (Configuration of Battery Unit)

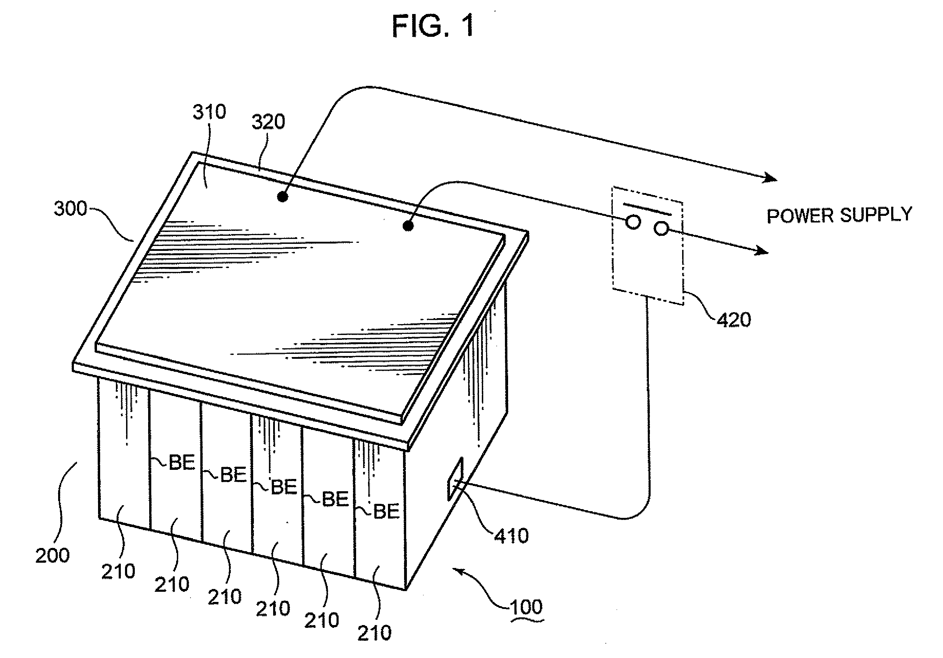

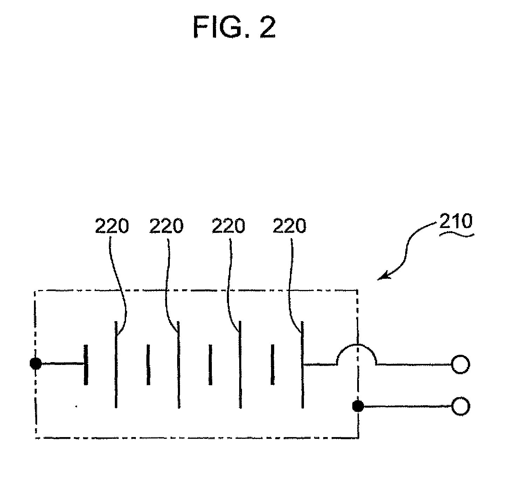

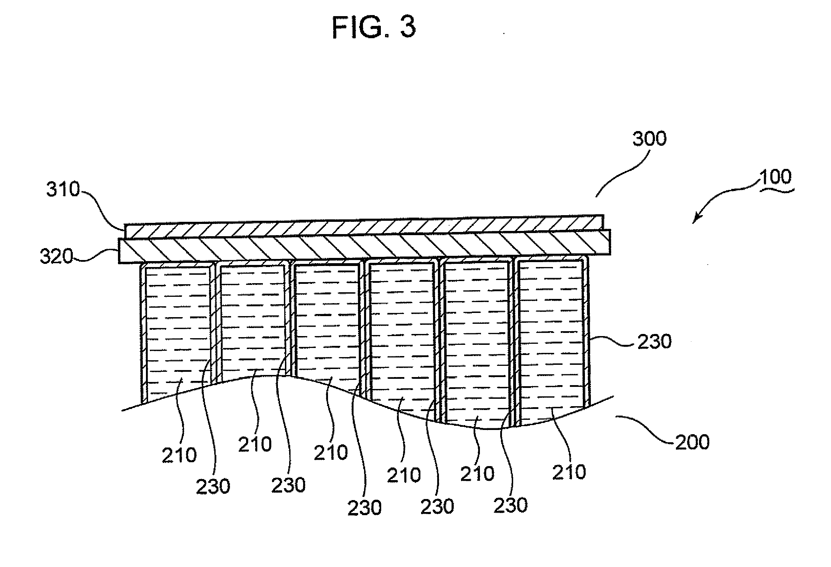

Fig. 1 is a perspective view of a battery unit. Fig. 2 is a connection diagram of battery cells situated in a heater which heats a battery of the battery unit. Fig. 3 is a schematic cross-sectional view of the battery unit. The battery unit is described with reference to Figs. 1 to 3.

As shown in Fig. 1, the battery unit 100 includes a substantially rectangular parallelepiped battery 200 and a substantially plate-like heater 300 which heats the battery 200. The heater 300 is placed on the top surface of the battery 200. In the present embodiment, the top surface of the battery 200 is exemplified as the heated surface which is subjected to the heat from the heater 300.

The battery 200 has six battery cell modules 210. Alternatively, the battery 200 may include no more than five battery cell modules 210 or no less than seven battery cell modules 210. The six battery cell modules 210 are horizontally stacked.

Edges BE of boundaries between the battery cell modules 210 appear on the periphery of the battery 200 including the top surface on which the heater 300 is mounted. The heater 300 is situated over the five edges BE which appear on the top surface of the battery 200. Thus, the heater 300 comes into contact with each of the six battery cell modules 210.

As shown in Fig. 2, the battery cell module 210 includes four battery cells 220. Alternatively, the battery cell module 210 may include no more than three battery cells 220 or no less than five battery cells 220. The four battery cells 220 mounted in the battery module 210 are connected in series.

As shown in Fig. 3, the battery cell module 210 has an exterior package 230 which defines a space for storing the battery cells 220.

The exterior package 230 which forms an outer surface of the battery cell module 210 is preferably formed of metal with relatively high thermal conductivity. Thus, the heat from the heater 300 is appropriately transferred to the whole battery 200.

As shown in Figs. 1 and 3, the heater 300 includes a sheet-like heating element 310 and a heat conductor 320 which is situated between the heating element 310 and the top surface of the battery 200. The heat conductor 320 comes into contact with each of the battery cell modules 210 of the battery 200.

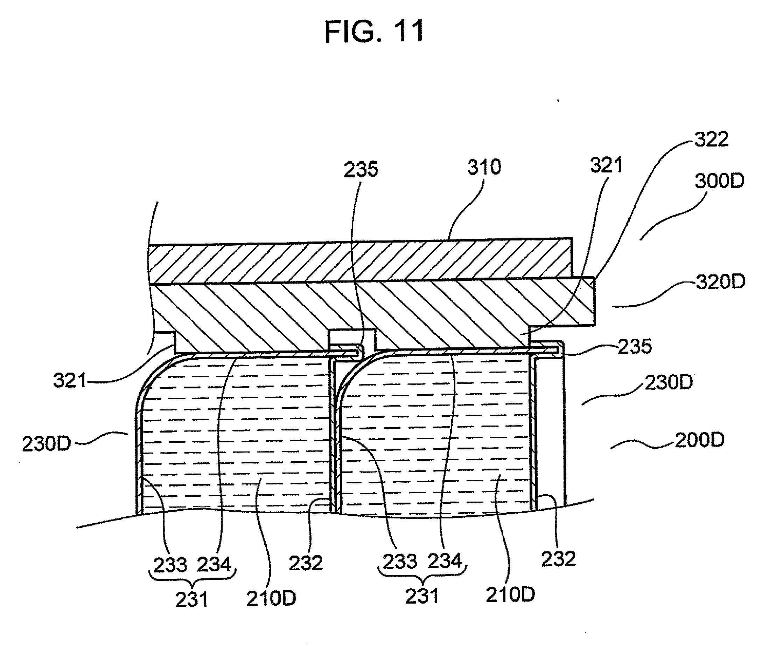

The heat conductor 320 is situated along a direction in which the six exterior packages 230 are stacked. The heat conductor 320 disposed to cover the top surface of the battery 200, which is formed by the six exterior packages 230, is formed in a thin plate form of the same metal as the exterior package 230. An aluminum plate or a cooper plate is exemplified as the metallic material used as the heat conductor 320 and the exterior package 230. However, another metallic material having high thermal conductivity may be used. It may be preferable in terms of thermal efficiency that the heat conductor 320 has a relatively thin thickness. For example, a metallic plate having a thickness of 3 mm may be preferably used. However, the metallic plate may have a thicker part more than 3 mm in response to a surface profile of the battery 200 (a connection portion 235 (see Fig. 11) which is described later). The heat conductor 320 which comes into contact with each of the six exterior packages 230 transfers the heat from the heating element 310 to the battery 200. Since the same metallic material as the exterior package 230 is used for the heat conductor 320, it becomes less likely that there is electric corrosion between the exterior package 230 and the heat conductor 320. Thus, it also becomes less likely that a heat transfer coefficient between the exterior package 230 and the heat conductor 320 goes down and that the corrosion of the exterior package 230 shortens a lifespan of the battery 200.

The heating element 310 which generates the heat to heat the battery 200 is situated along the top surface of the heat conductor 320. The bottom surface of the heating element 310 appropriately comes into contact with the top surface of the heat conductor 320. Thus, the heat from the heating element 310 is appropriately transferred to the heat conductor 320.

As shown in Fig. 1, the battery unit 140 includes a thermo-sensor 410 and a control circuit 420 which is electrically connected to the thermo-sensor 410. The control circuit 420 controls an amount of electric power, which is supplied to the heating element 310 in response to output signals from the thermo-sensor 410. Thus, the heat from the heating element 310 goes up or down under the control of the control circuit 420. The thermo-sensor 410 is attached to the rightmost battery cell module 210 in the present embodiment. Alternatively, the thermo-sensor 410 may be attached to another battery cell module 210. Several thermo-sensors 410 may be attached to different battery cell modules 210. In the present embodiment, a contact type of thermo-sensor is used as a temperature detector. Alternatively, an appropriate device, element or structure configured to detect a temperature of the battery cell module 210 may be used as the temperature detector. In the present embodiment, the control circuit 420 is used as a controller, which is separate from the thermo-sensor 410, to control an amount of the power supplied to the heating element 310. Alternatively, a control circuit integrated with the thermo-sensor 410, or another circuit, an element or a structure configured to control an amount of the power supplied to the heating element 310 in response to a temperature of the battery cell module 210 may be used as the controller.

### (Operation of Battery Unit)

An operation of the battery unit 100 is described with reference to Fig. 1.

The thermo-sensor 410 detects a temperature of the battery cell module 210. The control circuit 420 determines whether or not the temperature of the battery cell module 210 is lower than a predetermined lower limit threshold temperature, on the basis of the detection signal output from the thermo-sensor 410.

If the temperature of the battery cell module 210 is lower than the lower limit threshold temperature, the control circuit 420 starts supplying the heating element 310 with electric power. Thereafter, if the thermo-sensor 410 outputs a signal indicating that the temperature of the battery cell module 210 is higher than a predetermined upper limit threshold temperature, the control circuit 420 stops supplying the electric power to the heating clement 310.

The heating element 310 generates the heat from the start to the end of the power supply. The heat from the heating element 310 is transferred to each battery cell module 210 via the heat conductor 320 to increase the temperature of the battery 200. The heat conductor 320 made of metal having high thermal conductivity makes a heat quantity distribution from the heating element 310 uniform. Thus, in the present embodiment, even though the heating element 310 having a non-uniform heat quantity distribution is assembled in the battery unit 100, the heat quantity distribution on the bottom surface of the heat conductor 320 becomes substantially uniform, so that each battery cell module 210 receives substantially uniform heat. Thus, it becomes likely that there are few differences in the temperature between the battery cell modules 210.

### (Second Embodiment)

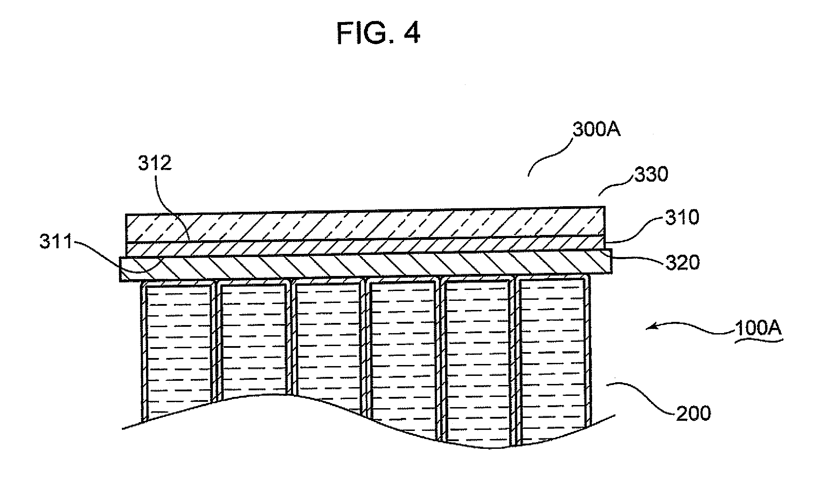

Fig. 4 is a schematic cross-sectional view of a battery unit according to the second embodiment. The same components described in the context of the first embodiment are denoted by the same reference numerals. Differences from the first embodiment are described with reference to Fig. 4. The descriptions in the context of the first embodiment are appropriately applied to components which are not described below.

A battery unit 100A includes the battery 200 described in the context of the first embodiment, and a heater 300A which heats the battery 200. The heater 300A includes an insulating layer 330 having thermal insulation properties, in addition to the heat conductor 320 and the heating element 310 which are described in the context of the first embodiment.

The heating element 310 includes a first surface 311, which faces the top surface of the heat conductor 320, and a second surface 312 opposite to the first surface 311. The insulating layer 330 is situated along the second surface 312. The insulating layer 330 which covers the whole second surface 312 suppresses thermal radiation which is directed upward from the heating element 310. As a result, the thermal transfer efficiency to the battery 200 situated below the heating element 310 goes up. Thus, in the present embodiment, the battery unit 100A may have high thermal efficiency. For example, a heat-resistant fiber sheet, a glass fiber sheet, a ceramic sheet, a composite sheet in which a lagging material including the aforementioned materials and a steel plate are laminated, a foamed cushion material (for example, a foamed plastic lagging material (hard urethane foam, polyethylene foam, foamed glass or alike)), or another heat insulator configured to provide thermal insulation properties may be used as the insulating layer 330.

### (Third Embodiment)

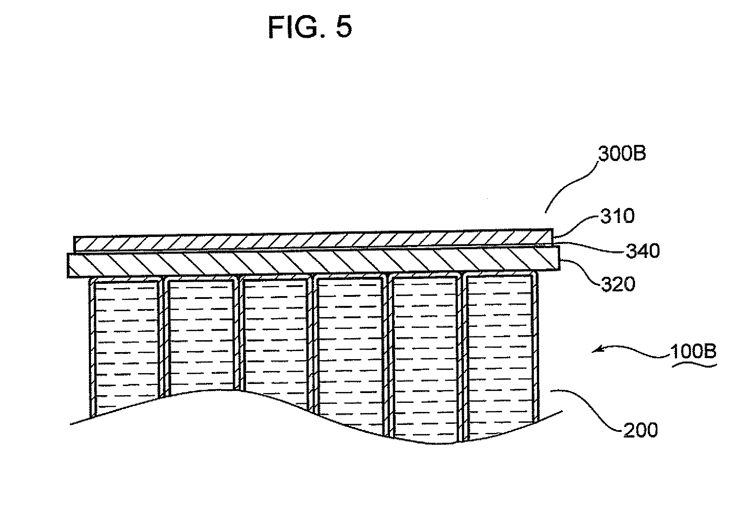

Fig. 5 is a schematic cross-sectional view of a battery unit according to the third embodiment. The same components described in the context of the first embodiment are denoted by the same reference numerals. Differences from the first embodiment are described with reference to Fig. 5. The descriptions in the context of the first embodiment are appropriately applied to components which are not described below.

The battery unit 100B includes the battery 200 described in the context of the first embodiment, and a heater 300B which heats the battery 200. The heater 300B includes an adhesive layer 340 which is a thin film to bond the heat conductor 320 with the heating element 310, in addition to the heat conductor 320 and the heating element 310, which are described in the context of the first embodiment. In the present embodiment, the adhesive layer 340 is formed from adhesive. Alternatively, a dual sided tape including a metallic base material having relatively high thermal conductivity, or another suitable adhesive element for bonding the heat conductor 320 with the heating element 310 may be used as the adhesive layer 340.

The adhesive layer 340, which may have a very thin thickness, is less likely to decrease a heat transfer coefficient between the heat conductor 320 and the heating element 310. The adhesive layer 340 may appropriately prevent ambient temperature changes, where the battery unit 100B is used, or aging degradation of the battery unit 100B from causing gaps between the heating element 310 and the heat conductor 320. Accordingly, there may be few changes in heating performance of the heater 300B. Thus, the battery unit 100B according to the present embodiment may be highly reliable.

A user may integrally deal with the heat conductor 320 and the heating element 310 which are bonded in advance by the adhesive layer 340. Thus, the user may easily attach the heater 300B to the battery 200 to achieve high work efficiency for attaching the heater 300B to the battery 200.

### (Fourth Embodiment)

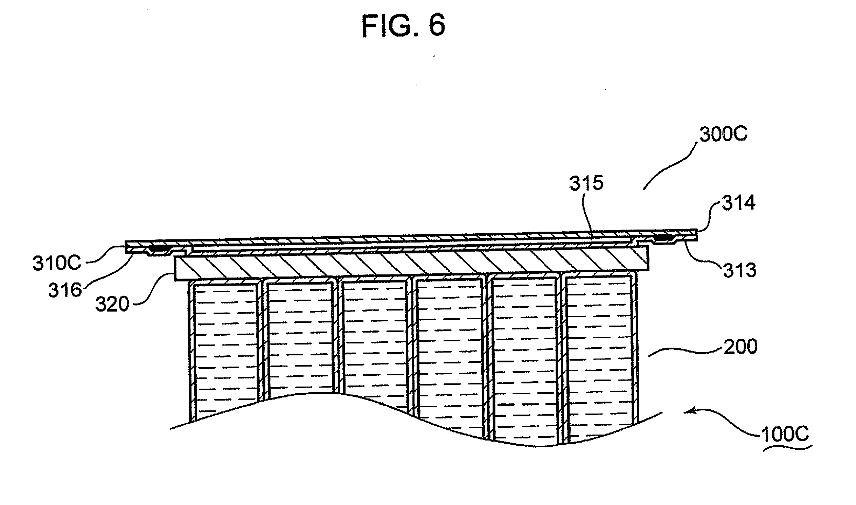

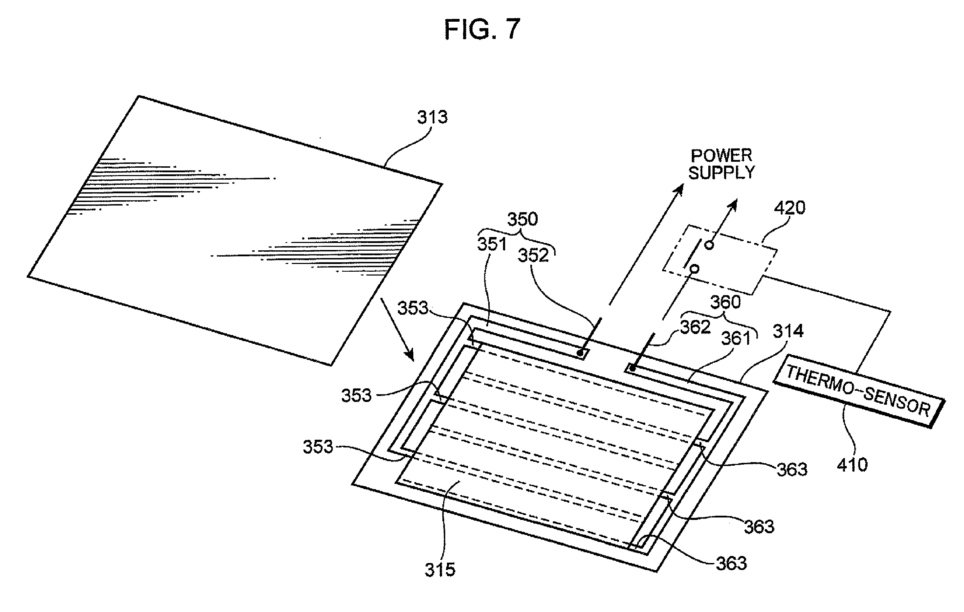

Fig. 6 is a schematic cross-sectional view of a battery unit according to the fourth embodiment. Fig. 7 is a schematic exploded perspective view of a heating element used in the battery unit according to the fourth embodiment. The same components described in the context of the first embodiment are denoted by the same reference numerals. Differences from the first embodiment are described with reference to Figs. 6 and 7. The descriptions in the context of the first embodiment are appropriately applied to components which are not described below.

As shown in Fig. 6, the battery unit 100C includes the battery 200 described in the context of the first embodiment and a heater 300C which heats the battery 200. The heater 300C includes a PTC heater 310C which is used as the sheet-like heating element, in addition to the heat conductor 320 described in the context of the first embodiment.

The PTC heater 310C includes an insulating cover 313 which comes into contact with the heat conductor 320, an insulating base material 314 attached onto the insulating cover 313, and a PTC resistive element 315 situated between the insulating cover 313 and the insulating base material 314. The insulating cover 313 and the insulating base material 314 have electric insulation properties. The insulating cover 313 includes a flange 316 which surrounds a recess for storing the PTC resistive element 315. The PTC resistive element 315 stored in the recess, which is formed on the insulating cover 313, is surrounded by the insulating cover 313 and the insulating base material 314 which is connected to the top surface of the flange 316. Thus, the insulating cover 313 and the insulating base material 314 are used as an outer shell which covers the PTC resistive element 315. The insulating cover 313 and the insulating base material 314 appropriately suppress leakage of electric energy supplied to the PTC resistive element 314.

As shown in Fig. 7, the PTC heater 310C includes first and second electrodes 350, 360 which transfer electric power to the PTC resistive element 315. The first electrode 350 includes a comb-shaped first coated portion 351 on the insulating base material 314 and a first electrode rod 352 which protrudes from the outer shell formed by the insulating cover 313 and the insulating base material 314. The first electrode rod 352 is electrically connected to a power supply which supplies the PTC heater 310C with electric power. The second electrode 360 includes a comb-shaped second coated portion 361 on the insulating base material 314 and a second electrode rod 362 which protrudes from the outer shell formed by the insulating cover 313 and the insulating base material 314. The second electrode rod 362 is electrically connected to the power supply which supplies the PTC heater 310C with electric power via the control circuit 420 which is described in the context of the first embodiment.

The first coated portion 351 has three first extension portions 353 which extend toward the second coated portion 361. The second coated portion 361 has three second extension portions 363 which extend toward the first coated portion 351. The substantially rectangular sheet-like PTC resistive element 315 is placed on the first and second extension portions 353, 363 which are alternately aligned. Thus, the PTC resistive element 315 which is electrically connected to the first and second extension portions 353, 363 generates substantially uniform heat in response to electric power supplied from the power supply. The heat from the PTC resistive element 315 is transferred to the heat conductor 320 via the insulating cover 313. The heat conductor 320 makes the transferred heat distribution uniform, and further transfers the heat to the battery 200.

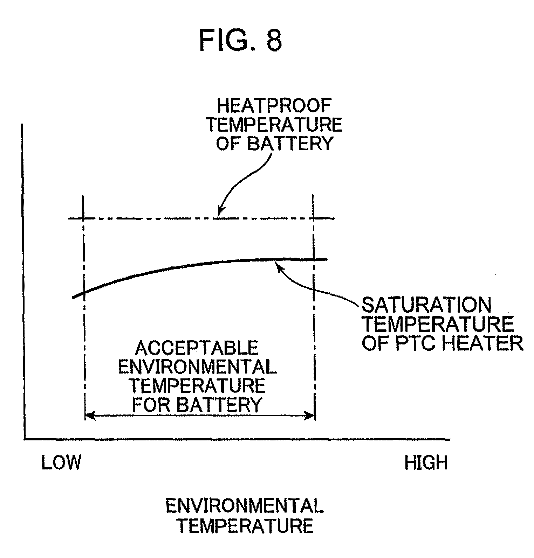

Fig. 8 shows a relationship between a saturation temperature of the PTC heater 310C and a heatproof temperature of the battery 200. The battery unit 100C is further described with reference to Figs. 6 to 8.

As shown in Fig. 8, the PTC heater 310C is formed so that the saturation temperature of the PTC heater 310C may be lower than the heatproof temperature of the battery 200 under an environment where the battery 200 is used. Thus, it becomes less likely that there is excessive heating by the PTC heater 310C.

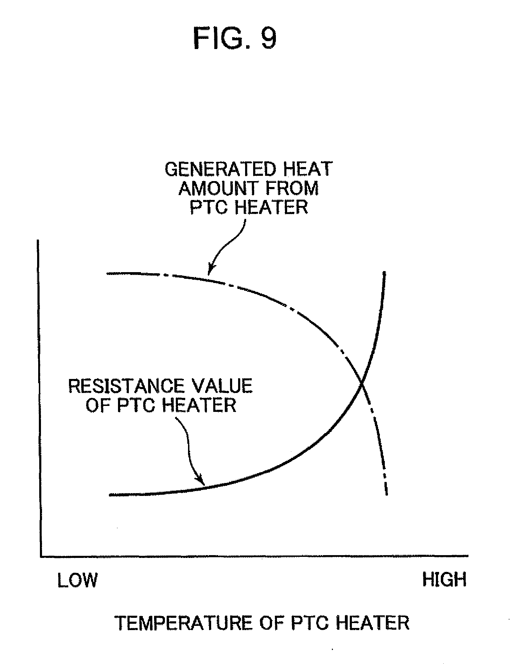

Fig. 9 is a graph showing characteristics of the PTC heater 310C. An operation of the battery unit 100C is described with reference to Figs. 6 to 9.

As shown in Fig. 9, the PTC resistive element 315 has positive resistance characteristics. If the battery unit 100C is placed under a low environmental temperature, the PTC resistive element 315 has a low resistance value. As a result, if the power supply starts supplying electric power, a heat amount generated from the PTC heater 310C goes up. If the temperature of the PTC heater 310C increases, a resistance between the first and second electrodes 350, 360 goes up. As a result, the heat amount generated from the PTC heater 310C goes down. As described above, if the temperature increases, it becomes less likely that the generated heat amount increases. Thus, the PTC heater 310C has saturation characteristics which keep the amount of the generated heat constant if the temperature of the PTC heater reaches a certain temperature (saturation temperature).

Unless there are any troubles in the thermo-sensor 410 and/or the control circuit 420, the control circuit 420 determines whether or not a temperature of battery 200 is lower than a predetermined lower limit threshold temperature, on the basis of the detection signal from the thermo-sensor 410 as described in the context of the first embodiment. If the temperature of battery 200 is lower than the lower limit threshold temperature, the control circuit 420 starts supplying the PTC heater 310C with electric power from the power supply. As a result, the temperature of the PTC heater 310C increases, and the resistance value between the first and second electrodes 350, 360 goes up. Thus, a temperature increase rate of the PTC heater 310C gradually decreases. If the temperature of battery 200 is higher than the predetermined upper limit threshold temperature, the control circuit 420 stops supplying the PTC heater 310C with electric power from the power supply.

If there are failures in the thermo-sensor 410 and/or the control circuit 420, the temperature of the PTC heater 310C does not exceed the saturation temperature. Thus, the temperature of the PTC heater 310C is maintained below the heatproof temperature of the battery 200 without depending on power supply stop control by the control circuit 420. Thus, it becomes likely that there are few failures of the battery unit 100C (in the worst case, destruction or explosion of the battery 200). Thus, according to the fourth embodiment, the battery unit 100C may become safer.

### (Fifth Embodiment)

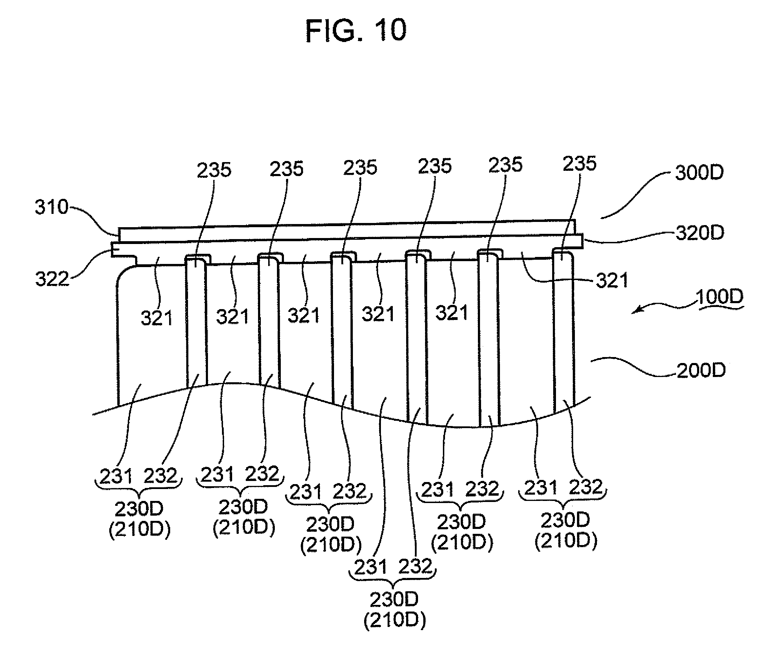

Fig. 10 is a schematic cross-sectional view showing a battery unit according to the fifth embodiment. Fig. 11 is an enlarged view schematically showing a connection structure between a battery and a heater which are used in the battery unit according to the fifth embodiment. The same components described in the context of the first embodiment are denoted by the same reference numerals. Differences from the first embodiment are described with reference to Figs. 10 and 11. The descriptions in the context of the first embodiment are appropriately applied to components which are not described below.

The battery unit 100D has a battery 200D and a heater 300D which heats the battery 200D. The battery 200D has six battery cell modules 210D. Alternatively, the battery 200D may include no more than five battery cell modules 210D or no less than seven battery cell modules 210D. The six battery cell modules 210D are horizontally stacked.

The battery cell module 210D includes an exterior package 230D which stores battery cells 220 (see Fig. 2), like the exterior package 230 described in the context of the first embodiment. The exterior package 230D includes a bathtub-shaped case 231, and a cover portion 232 configured to cover an opening of the case 231.

As shown in Fig. 11, the case 231 includes a bottom wall 233 which abuts on the cover portion 232 of the adjacent battery cell module 210D, and a peripheral wall 234 which abuts on the heater 300D. The cover portion 232 includes a connection portion 235 which clamps an edge of the peripheral wall 234, which defines the opening of the case 231 at the opposite side to the bottom wall 233.

A part of the connection portion 235 which clamps the peripheral will 234 appears outside the peripheral wall 234. Thus, the connection portion 235 protrudes from the peripheral wall 234 by the thickness of a metallic plate used for the cover portion 232. Thus, the connection portion 235 appears as a protrusion on the top surface of the battery 200D on which the heater 300D is installed. As a result, a recess is defined between the connection portions 235 which appear as the protrusion of the top surface of the battery 200D. Thus, a concavo-convex profile is formed on the top surface of the battery 200D on which the heater 300D is installed.

The heater 300D includes a sheet-like heating element 310 and a sheet-like heat conductor 320D which is situated between the heating element 310 and the top surface of the battery 200D. The heat conductor 320D comes into contact with each of the battery cell modules 210D.

The heat conductor 320D has ribs 321 which are complementary to the recesses defined on the top surface of the battery 200D, respectively, and a base 322 situated along the top surface of the battery 200D. The heating element 310 is installed on the top surface of the base 322. In the present embodiment, the rib 321 is exemplified as the projection complementary to the recess defined on the heated surface. The rib 321 protrudes downward from the base 322 and abuts on the outer surface of the peripheral wall 234 of the exterior package 230D. Grooves for storing the connection portions 235, respectively, which appear as the protrusions of the top surface of the battery 200D, are defined among six projections 321 intermittently aligned along the top surface of the battery 200D.

The groove defined between the projections 321 prevents inappropriate interference between the connection portion 235 and the heat conductor 320D. As a result, the rib 321 which appropriately comes into contact with the peripheral wall 234 of the case 231 may highly efficiently transfer the heat from the heating element 310 to the battery 200D. Optionally, the connection portion 235 may come into contact with the surface of the heat conductor 320D which defines the groove. As a result, a contact area between the heat conductor 320D and the battery 200D increases to achieve higher heat efficiency.

In the present embodiment, a boundary between the peripheral wall 234 of the case 231 and the rib 321 is defined on the substantially same level. Alternatively, the rib 321 may come into contact with the peripheral wall 234 at a different level within an acceptable tolerance of the heat transfer amount on the battery cell module 210D.

As described above, the battery unit described in the context of the first to fifth embodiments includes the battery with the stacked battery cell modules. The heater of the battery unit is less likely to cause uneven temperature distribution among the battery cell modules. The heater may also efficiently heat the battery. Thus, the battery unit described in the first to fifth embodiments may be appropriately used for hybrid or electric vehicles in cold regions. In addition, the principles of the battery unit described in the first to fifth embodiments may be appropriately applied to other equipment which uses electric power from a battery with stacked battery cell modules.

The aforementioned embodiments mainly include the following configurations.

According to one aspect of the aforementioned embodiments, a heater for heating a battery with stacked battery cell modules includes a heating element, and a heat conductor situated along the heating element, wherein the heat conductor comes into contact with each of the battery cell modules.

According to the aforementioned configuration, the heater is designed to heat the battery with the stacked battery cell modules. The heating element of the heater is situated along the battery. The heat conductor situated along the heating element causes uniform heat transfer to the battery. Since the heat conductor comes into contact with each battery cell module, it becomes likely that the battery cell modules are uniformly heated. Thus, a temperature difference between the battery cell modules is appropriately mitigated.

In the aforementioned configuration, the heat conductor is preferably situated along a direction in which the battery cell modules are stacked.

According to the above configuration, the heat conductor is situated along a direction in which the battery cell modules are stacked. Thus, the heat conductor appropriately comes into contact with each battery cell module. Therefore, the temperature difference between the battery cell modules is appropriately mitigated.

In the aforementioned configuration, preferably, the battery includes a heated surface on which edges of boundaries between the battery cell modules appear, and the heat conductor is situated along the heated surface over the edges.

According to the aforementioned configuration, the battery includes a heated surface on which the edges of the boundaries between the battery cell modules appear. The heat conductor is situated along the heated surface over the edges, so that the heat conductor appropriately comes into contact with each battery cell modules. Accordingly, the temperature difference between the battery cell modules is appropriately mitigated.

In the aforementioned configuration, preferably, each of the battery cell modules includes an exterior package which forms an outer surface of each of the battery cell modules, and the heat conductor is made of a metallic material which is also used for the exterior package of each of the battery cell modules.

According to the above configuration, the heat conductor is made of a metallic material which is also used for the exterior package that forms an outer surface of each battery cell modules. Thus, it becomes less likely that there is electric corrosion between the heat conductor and the exterior package. Accordingly, it becomes less likely that the electric corrosion shortens a lifespan of the battery to decrease a heat transfer coefficient with time.

In the above configuration, preferably, the heater further includes an insulating layer with thermal insulation properties, wherein the heating element includes a first surface, which faces the heat conductor, and a second surface opposite to the first surface, and the insulating layer is situated along the second surface,

According to the above configuration, the first surface of the heating element faces the heat conductor, so that the heat is transferred to the heat conductor via the first surface of the heating element. The insulating layer with the thermal insulation properties is situated along the second surface opposite to the first surface, so that there is less heat transfer via the second surface and more heat transfer to the heat conductor via the first surface. Therefore, the heater may efficiently transfer the heat to the battery.

In the aforementioned configuration, the heater preferably further includes an adhesive layer configured to bond the heat conductor with the heating element.

According to the aforementioned configuration, since the adhesive layer bonds the heat conductor with the heating element, the heat conductor is integrated with the heating element. Thus, a user may easily attach the battery to the heater.

In the above configuration, the heating element preferably includes the heating element includes a PTC heater with a lower saturation temperature than a heatproof temperature of the battery.

According to the above configuration, since the PTC heater has the lower saturation temperature than the heatproof temperature of the battery, it becomes less likely that heating happens at a higher temperature than the heatproof temperature of the battery. Thus, the heater may have relatively high safety.

In the aforementioned configuration, preferably, a recess is formed on the heated surface, the heat conductor includes a protrusion complementary to the recess, and the protrusion inserted into the recess comes into contact with the heated surface.

According to the aforementioned configuration, the protrusion of the heat conductor is inserted into the recess formed on the heated surface. As a result, the protrusion of the heat conductor comes into contact with the heated surface. Thus, even under presence of the recess formed on the heated surface, the heat is efficiently transferred to the battery.

According to another aspect of the aforementioned embodiments, a battery unit includes a battery with stacked battery cell modules, and a heater configured to heat each of the battery cell modules, wherein the heater includes a heating element and a heat conductor situated along the heating element, the heat conductor comes into contact with each of the battery cell modules.

According to the aforementioned configuration, the heating element of the heater is situated along the battery. The heat conductor situated along the heating element causes uniform heat transfer to the battery. Since the heat conductor comes into contact with each battery cell module, it becomes likely that the battery cell modules are uniformly heated. Thus, a temperature difference between the battery cell modules is appropriately mitigated.

In the aforementioned configuration, preferably, each of the battery cell modules includes an exterior package which forms an outer surface of each of the battery cell modules, and the heat conductor is made of a metallic material which is also used for the exterior package of each of the battery cell modules.

According to the above configuration, the heat conductor is made of a metallic material which is also used for the exterior package that forms an outer surface of each battery cell modules. Thus, it becomes less likely that there is electric corrosion between the heat conductor and the exterior package. Accordingly, it becomes less likely that the electric corrosion shortens a lifespan of the battery to decrease a heat transfer coefficient with time.

## Claims

1. A heater for heating a battery with stacked battery cell modules, comprising:
a heating element, and
a heat conductor situated along the heating element, wherein
the heat conductor comes into contact with each of the battery cell modules.

2. The heater according to claim 1, wherein
the heat conductor is situated along a direction in which the battery cell modules are stacked.

3. The heater according to claim 1 or 2, wherein
the battery includes a heated surface on which edges of boundaries between the battery cell modules appear, and
the heat conductor is situated along the heated surface over the edges.

4. The heater according to any one of claims 1 to 3, wherein
each of the battery cell modules includes an exterior package which forms an outer surface of each of the battery cell modules, and
the heat conductor is made of a metallic material which is also used for the exterior package of each of the battery cell modules.

5. The heater according to any one of claims 1 to 4, further comprising:
an insulating layer with thermal insulation properties, wherein
the heating element includes a first surface, which faces the heat conductor, and a second surface opposite to the first surface, and
the insulating layer is situated along the second surface.

6. The heater according to any one of claims 1 to 5, further comprising:
an adhesive layer configured to bond the heat conductor with the heating element.

7. The heater according to any one of claims 1 to 6, wherein
the heating element includes a PTC heater with a lower saturation temperature than a heatproof temperature of the battery.

8. The heater according to claim 3, wherein
a recess is formed on the heated surface,
the heat conductor includes a protrusion complementary to the recess, and
the protrusion inserted into the recess comes into contact with the heated surface.

9. A battery unit, comprising:
a battery with stacked battery cell modules, and
a heater configured to heat each of the battery cell modules, wherein
the heater includes a heating element and a heat conductor situated along the heating element,
the heat conductor comes into contact with each of the battery cell modules.

10. The battery unit according to claim 9, wherein
each of the battery cell modules includes an exterior package which forms an outer surface of each of the battery cell modules, and
the heat conductor is made of a metallic material which is also used for the exterior package of each of the battery cell modules.
